# EUROPÄISCHE PATENTSCHRIFT

(11) **EP 1 141 588 B1**
(45) Veröffentlichungstag und Bekanntmachung des Hinweises auf die Patenterteilung: **07.01.2004**
(21) Anmeldenummer: 00987001.5
(22) Anmeldetag: 20.10.2000
(51) Int. Cl.: F16H 59/10

(54) **SCHALTVORRICHTUNG MIT EINEM SCHALTHEBEL FÜR EIN AUTOMATIKGETRIEBE EINES KRAFTFAHRZEUGES**
SHIFTING DEVICE COMPRISING A GEARSHIFT LEVER FOR AN AUTOMATIC TRANSMISSION OF A MOTOR VEHICLE
DISPOSITIF DE CHANGEMENT DE VITESSES COMPRENANT UN LEVIER DE CHANGEMENT DE VITESSES POUR LA BOITE DE VITESSES AUTOMATIQUE D'UN VEHICULE AUTOMOBILE

(30) Priorität: 20.10.1999 DE 19950638
(43) Veröffentlichungstag der Anmeldung: 10.10.2001
(73) Patentinhaber: ZF Lemförder Metallwaren AG, 49441 Lemförde (DE)
(72) Erfinder: GIEFER, Andreas, 49448 Lemförde (DE); MEYER, Jörg, 49419 Wagenfeld (DE)
(86) Internationale Anmeldenummer: PCT/DE2000/003702
(87) Internationale Veröffentlichungsnummer: WO 2001/029453

(56) Entgegenhaltungen:
- DE-A- 19 829 173
- DE-C- 19 513 809
- DE-U- 29 518 788
- US-A- 5 577 418
- US-A- 5 862 708

## Beschreibung

Die Erfindung betrifft eine Schaltvorrichtung mit einem Schalthebel für ein Automatikgetriebe eines Kraftfahrzeuges mit einer Entriegelungsmechanik zum Entriegeln des Schalthebels mit einem Handbetätigungselement, wobei der Schalthebel in mindestens einer Schaltgasse zwischen mindestens zwei unterschiedlichen Schaltstellungen beweglich und in diesen Schaltstellungen zumindest teilweise in Abhängigkeit von unterschiedlichen Fahrzeugkonfigurationen verriegelbar ist, wobei in der Entriegelungsmechanik ein federndes Kraftübertragungselement vorgesehen ist.

Derartige Schaltvorrichtungen mit Schalthebeln sind bei Automatikgetrieben für Kraftfahrzeuge im Einsatz, wobei solche Automatikgetriebe in der Regel zumindest eine Automatikgasse aufweisen, in welcher der Schalthebel zwischen den Positionen "P" für die Parkstellung, "R" für den Rückwärtsgang, "N" für eine Neutralstellung, die eine Entkopplung des Getriebes vom Fahrzeug bewirkt, und "D" für die Vorwärtsfahrt mit automatisch geschalteten Getriebeübersetzungen geschaltet werden kann. In den meisten Fällen sind zusätzlich zur "D"-Stellung noch weitere Schaltpositionen vorgesehen, um unterschiedliche Getriebeprogramme anwählen zu können. In manchen Fällen existiert zusätzlich noch eine Tiptronic-Gasse, in der die Gänge des Getriebes manuell gewählt werden können.

Um den Schalthebel nicht versehentlich zu bewegen und damit entweder Schäden am Fahrzeug oder eine sonstige Gefährdung vermeiden zu können, ist in den meisten bekannten Schalthebeln ein Handbetätigungselement in Form von beispielsweise eines Entriegelungsknopfes angebracht, durch das eine bewußte Entriegelung der Schaltvorrichtung vorgenommen wird, so daß zum Beispiel der Schalthebel von der Position "P" auf die Position "R" umgelegt werden kann. Entsprechend werden auch Fehlbedingungen vermieden, die unbeabsichtigt zu einer Zerstörung des Getriebes, beispielsweise durch ein Einschalten des Rückwärtsganges bei hoher Vorwärtsgeschwindigkeit, führen könnten.

Ein Beispiel für eine derartige Schaltvorrichtung mit einem Schalthebel für ein Automatikgetriebe eines Kraftfahrzeuges ist aus der Patentschrift der Anmelderin DE 195 13 809 C1 bekannt. Diese Patentschrift offenbart einen Schalthebel, mit einem am oberen Ende des Schalthebels angeordneten Knauf, eine am Schalthebel axial geführte Sperrstange und einen von Hand betätigbaren verschieblichen Entriegelungsknopf, über den durch Eindrücken des Entriegelungsknopfes die Sperrstange über eine Kraftumlenkung angehoben werden kann und damit die Verriegelung des Schalthebels aufhebt.

Eine weitere ähnliche Schaltvorrichtung mit einem Schalthebel für ein Automatikgetriebe ist in der noch nicht vorveröffentlichten Patentanmeldung der Anmelderin DE 198 29 173 dargestellt. Dieser Schalthebel weist ebenfalls am oberen Ende einen Knauf, eine axial geführte Sperrstange und einen von Hand beweglichen Entriegelungsknopf zur Betätigung der Sperrstange auf. Die Kraftübertragung zwischen dem Entriegelungsknopf und der Sperrstange erfolgt über eine feste Verzahnung auf einer elliptischen Kontur, so daß sich ein günstiger Verlauf der Handkräfte bei der Betätigung des Entnegelungsknopfes ergibt.

Zur Vermeidung von Fehlbedienungen des Fahrzeuges verfügen moderne Schaltvorrichtungen über ein System zur Blockierung des Entriegelungsmechanismus⁶ des Schalthebels in bestimmten Fahrzeugkonfigurationen, wie beispielsweise ein sogenanntes Key-Lock-System. Beim Key-Lock-System soll beispielsweise verhindert werden, daß die Parksperre ohne einen Zündschlüssel betätigt wird. Das heißt, der Schalthebel kann durch eine Blockierung des Entriegelungsmechanismus' solange nicht aus seiner "P"-Position bewegt werden, solange der Zündschlüssel nicht entsprechend eingesetzt ist. Dieses System vermeidet also ein unbeabsichtigtes Losrollen des Fahrzeuges.

Problematisch wird nun ein derartiges System, wenn der Fahrer die Funktionsweise des Key-Lock-Systemes in Verbindung mit der Automatikschaltung nicht beherrscht und versucht die Entriegelung des Schalthebels durch entsprechend große Krafteinwirkung auf den Entriegelungsknopf durchzusetzen, obwohl das Key-Lock-System eigentlich die Bewegung des Schalthebels blockiert. Wird in solch einer Situation trotz Blockade des Entriegelungsknopfes dieser zur Entriegelung des Schalthebels mit Gewalt betätigt, so führt dies meist zur Zerstörung eines der kraftübertragenden Elemente des Entriegelungsmechanismus', wodurch letztendlich die Funktionsfähigkeit der Schalteinrichtung zumindest beeinträchtigt sein kann.

Die DE 295 18 788 U1 offenbart eine Schaltvorrichtung mit einem Schalthebel, in dem eine axial verschiebbare Sperrstange angeordnet ist, die mit einer Rastplatte zum Festlegen des Schalthebels zusammenwirkt. Am oberen Ende des Schalthebels ist ein Knauf mit einem Tastschalter vorgesehen, an dem ein Zwischenglied zum Anheben der Sperrstange angelenkt ist. Der Tastschalter ist am vorderen Ende des Knaufs angeordnet und kann zum Betätigen in den Knauf hineingedrückt werden. Dadurch wird das Zwischenglied geschwenkt, von welchem die Sperrstange in axialer Richtung des Schalthebels angehoben wird.

Die US 5 577 418 offenbart eine gattungsgemäße Schaltvorricahtung mit einem Schalthebel, in dem eine axial verschiebbare Sperrstange angeordnet ist, die mit einer Rastplatte zum Festlegen des Schalthebels zusammenwirkt. Am oberen Ende des Schalthebels ist ein Knauf mit einem Tastschalter vorgesehen, der über eine axial verschiebbar in dem Schalthebel gelagerte Betätigungsstange und eine Druckfeder mit dem oberen Ende der Sperrstange mechanisch gekoppelt ist: Der Tastschalter ist am vorderen Ende des Knaufs angeordnet und ist senkrecht zu der Bewegungsrichtung der Betätigungsstange bewegbar. Über eine der Betätigungsstange zugewandte und am Tastschalter ausgebildete Schräge wird diese Bewegung des Tastschalters in eine axiale Bewegung der Betätigungsstange umgesetzt, welche dann die Sperrstange über die Federkopplung in axialer Richtung des Schalthebels nach unten bewegt.
Bei der Schaltvorrichtung nach der US 5 577 418 ist die Ankopplung des Tastschalters mit einer Schräge an das Ende der Betätigungsstange realisiert, so dass immer eine Komponente der für das Betätigen des Tastschalters erforderlichen Druckkraft über die Reibung des Endes an der Schräge abgebaut wird. Somit ist beim Bedienen des Tastschalters aber ein erhöhter Kraftaufwand erforderlich.

Es ist Aufgabe der Erfindung, eine Schaltvorrichtung mit einem Schalthebel für ein Automatikgetriebe eines Kraftfahrzeuges zu schaffen, bei dem im Falle einer gewollten Sperrung des Schalthebels die Betätigung des Handbetätigungselementes zur Entriegelung des Schalthebels auch bei größerer Krafteinwirkung keine Zerstörungen im Schalthebel und in der gesamten Schaltvorrichtung hervorruft.

Diese Aufgabe der Erfindung wird durch die Merkmale des Anspruches 1 gelöst. Ausgestaltungen sind Gegenstand der Unteransprüche.

Bei der erfindungsgemäßen Schaltvorrichtung mit einem Schalthebel für ein Automatikgetriebe eines Kraftfahrzeuges ruft im Falle einer gewollten Sperrung des Schalthebels die Betätigung des Handbetätigungselementes zur Entriegelung des Schalthebels auch bei größerer Krafteinwirkung keine Zerstörungen im Schalthebel und in der gesamten Schaltvorrichtung hervor.

Die oben beschriebene Zerstörung der Entriegelungsvorrichtung des Schalthebels oder deren Teile durch eine Mißbrauchsbetätigung kann vermieden werden, wenn die Kraftübertragung zwischen dem Handbetätigungselement zur Entriegelung des Schalthebels und der Sperrstange derart ausgestaltet wird, daß im Falle einer gewollten Sperrung der Entriegelung durch ein Key-Lock-System eine Betätigung des Handbetätigungselementes ab einer bestimmten Krafteinwirkung lediglich eine Einfederung eines Kraftübertragungselementes bewirkt, ohne daß unbedingt alle Elemente des Entriegelungsmechanismus, insbesondere eine Axialbewegung der Sperrstange, bewirkt werden muß. Gleichzeitig soll die Kraftübertragung zwischen dem Handbetätigungselement und der Sperrstange eine ausreichend feste Kopplung aufweisen, so daß durch die Betätigung des Handbetätigungselementes in einer erlaubten Fahrzeugkonfiguration eine Entriegelung des Schalthebels auftritt.

Demgemäß weist die Schaltvorrichtung mit einem Schalthebel für ein Automatikgetriebe eines Kraftfahrzeuges mit einer Entriegelungsmechanik zum Entriegeln des Schalthebels mit einem Handbetätigungselement, wobei der Schalthebel in mindestens einer Schaltgasse zwischen mindestens zwei unterschiedlichen Schaltstellungen beweglich und in diesen Schaltstellungen zumindest teilweise in Abhängigkeit von unterschiedlichen Fahrzeugkonfigurationen verriegelbar ist, in der Entriegelungsmechanik ein federndes Kraftübertragungselement auf.

Vorteilhaft bewirkt eine derartige Ausgestaltung der Schaltvorrichtung, daß nicht alle möglicherweise auftretenden Kräfte am Handbetätigungselement durch die Entriegelungsmechanik hindurchgeleitet werden, wodurch auch die Möglichkeit besteht, die mechanischen Teile leichter und damit kostengünstiger auszulegen.

Das federnde Kraftübertragungselement kann vorzugsweise als kraftübertragendes Verbindungsglied zwischen dem Handbetätigungselement und der restlichen Entriegelungsmechanik dienen.

Hierdurch wird erreicht, daß zwar im Normalfall die Betätigung des Handbetätigungselementes zu einer Bewegung der Entriegelungsmechanik führt, jedoch bei einer Blockierung der Entriegelungsmechanik das federnde Element des Kraftübertragungselementes einfedert, wodurch lediglich eine Bewegung des Handbetätigungselementes, nicht jedoch eine Bewegung oder ein Bruch in der Entriegelungsmechanik auftritt und somit eine Zerstörung der Schaltvorrichtung vermieden wird.

Zumindest ein Teil der Entriegelungsmechanik kann aus einer Sperrstange bestehen, welche durch das Handbetätigungselement bewegt werden kann.

Das federnde Kraftübertragungselement ist um eine Achse schwenkbar angeordnet, so daß eine Bewegung des Handbetätigungselementes etwa senkrecht zur Achse der Sperrstange eine gleichzeitige Axialbewegung der Sperrstange hervorrufen kann.

Das federnde Kraftübertragungselement weist einen Federträger und eine darauf verspannte, gekrümmte Schenkelfeder auf, die an ihrem einen Schenkel zweiseitig und an ihrem anderen Schenkel einseitig in Schwenkrichtung eingespannt ist. Hierdurch wird bewirkt, daß bei einer Bewegung des Kraftübertragungselementes die Schenkelfeder ab einer bestimmten Kraft verformt werden kann, ohne das Schäden an der vorhandenen Kinematik auftreten. Dabei ist der Federträger selbst schwenkbar gelagert.

Um eine bestimmte Kraft vorzudefinieren, ab der das federnde Kraftübertragungselement zerstörungsfrei die Bewegung einer gesperrten Sperrstange verhindert, kann vorgesehen werden, daß die Schenkelfeder des Kraftübertragungselementes eine Vorspannung aufweist, so daß im Normalbetrieb bei einer Betätigung des Handbetätigungselementes nicht das Gefühl einer zu weichen Kraftkopplung im Entriegelungsmechanismus des Schalthebels aufkommt.

Eine besondere Ausgestaltung des Kraftübertragungselementes sieht vor, daß die Schenkelfeder die Schwenkachse zumindest teilweise umschließt.

Die Kraftankopplung zwischen dem federnden Kranubcrtragungselement und dem Handbetätigungselement kann dadurch verwirklicht werden, daß eine schwenk- und schiebebewegliche Verbindung, vorzugsweise über den Eingriff eines Stiftes oder einer Rolle an einem der beiden Elemente in .eine Nut oder ein Langloch am jeweils anderen Element verwirklicht wird.

Weiterhin kann zur Kraftübertragung zwischen federndem Kraftübertragungselement und Sperrstange, die Sperrstange einen Anschlag oder einen Eingriff aufweisen, gegen oder in den das federnde Kraftübertragungselement eingreift.

Es ist selbstverständlich, daß auch eine umgekehrte Ausgestaltung der Kraftübertragung zwischen dem Handbetätigungselement, insbesondere einem Entriegelungsknopf an einem Schaltgriff und der Sperrstange, verwirklicht werden kann, ohne den Rahmen der Erfindung zu verlassen.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen.

Die Figuren zeigen im Einzelnen:
- Figur 1:: Schnitt eines Schalthebels, mit Sperrstange in Verriegelungsposition, ohne Betätigung des Handbetätigungselementes;
- Figur 2:: Schnitt eines Schalthebels, mit Sperrstange in entriegelter Position und betätigtem Handbetätigungselement;
- Figur 3:: Schnitt eines Schalthebels, mit Sperrstange in Verriegelungsposition und Handbetätigungselement in Mißbrauchstellung;
- Figur 4:: Federträger mit Schenkelfeder.

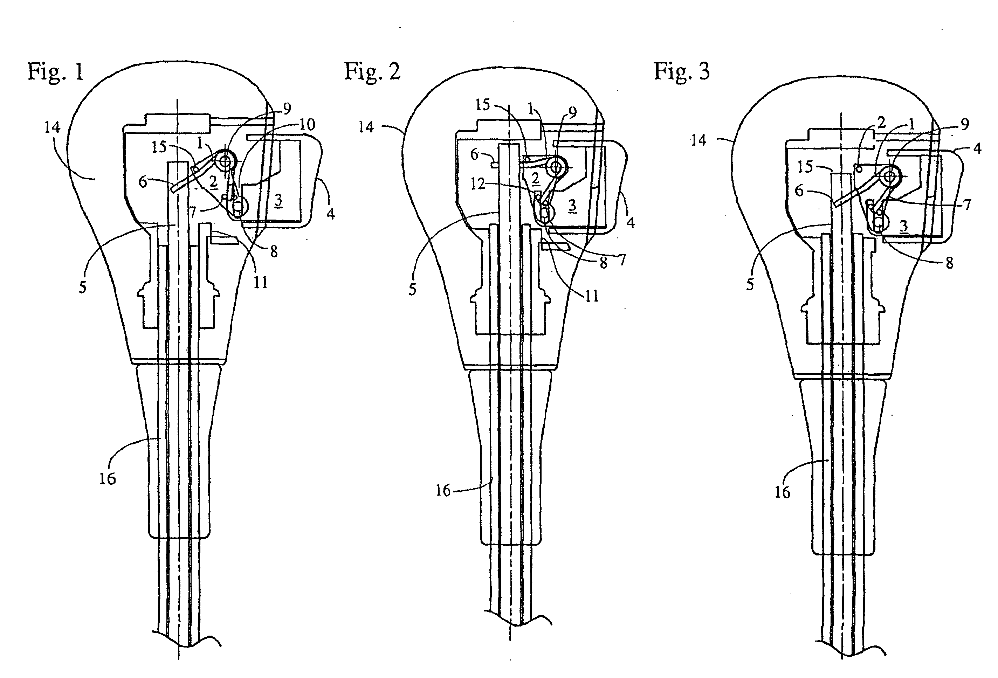

Die Figur 1 zeigt einen Schnitt durch einen erfindungsgemäßen Schalthebel für ein Automatikgetriebe eines Kraftfahrzeuges. Der Schalthebel besteht aus einem Schaltrohr 16, das mit der Schaltkinematik der hier nicht gezeigten Schaltvorrichtung selbst verbunden ist. Innerhalb des Schaltrohres 16 verläuft, als Teil der Entriegelungsmechanik, eine Sperrstange 5, die als Druck-/Zugstange ausgebildet ist und die zur Entriegelung des Schalthebels für die Bewegung des Schalthebels von einer bestimmten Schaltstellung in eine andere bestimmte Schaltstellung, zum Beispiel von "P" nach "R", angehoben werden muß. Am oberen Ende des Schaltrohres 16 befindet sich ein Schaltknauf 14, in dem sich ein senkrecht zur Längsachse der Sperrstange 5 verschiebbarer Entriegelungsknopf befindet. Durch ein Hineindrücken des Entriegelungsknopfes in den Schaltknauf 14 wird ein federndes Kraftübertragungselement, das hier aus einem Federträger 2 und einer mit diesem verbundenen Schenkelfeder 1 besteht, ausgelenkt, wobei der zweite Schenkelfederarm 7 eine Axialbewegung der Sperrstange 5 bewirkt.

Die kinematische Ankopplung zwischen Entriegelungsknopf 4 und dem Kraftübertragungselement mit Federträger 2 und Schenkelfeder 1 erfolgt über eine Nut 10 in einem Steg 3 des Entriegelungsknopfes, in das ein Führungsstift 8 des Federträgers 2 eingreift. Auf dem Federträger 2 befindet sich eine Schenkelfeder 1 mit einem ersten und einem zweiten Schenkelfederarm 6, 7. Der erste, knopfseitige Schenkelfederarm 6 ist an seinem Ende zwischen einem ersten und einem zweiten Federanschlag 12, 13 eingeklemmt, so daß jede rotatorische Bewegung des Federträgers 2 um die Achse 9 zu einer entsprechenden Bewegung des ersten Schenkelfederarms 6 führt. Der zweite Schenkelfederarm 7 liegt an einem dritten Federanschlag 15 an, wobei die gesamte Schenkelfeder 1 eine Vorspannung aufweist, so daß ein fester Anschlag des zweiten Schenkelfederarms 7 am dritten Federanschlag 15 gewährleistet ist. Durch diesen einseitigen Anschlag für den zweiten Schenkelfederarm 7 wird die Möglichkeit eröffnet, daß der zweite Schenkelfederarm 7 bei einer zu hohen Druckbeaufschlagung gegenüber einer im Uhrzeigersinn verlaufenden rotatorischen Bewegung des Federträgers 2 ausweichen kann oder falls durch die Federkraft die Sperrstange 5 anhebbar ist diese entsprechend anheben kann.

Die in der Figur 1 gezeigte Stellung von Sperrstange 5, Entriegelungsknopf 4 und federndem Kraftübertragungselement 1, 2 entspricht einer Ruhestellung, in der keine Betätigung des Entriegelungsknopfes 4 und somit keine Entriegelung der Schaltvorrichtung durch die Sperrstange vorliegt.

Die Figur 2 zeigt einen entsprechenden Schnitt durch den Schalthebel, wie er aus der Figur 1 bekannt ist, jedoch liegt in dieser Darstellung eine Betätigung des Entriegelungsknopfes 4 vor, indem der Entriegelungsknopf 4 senkrecht zur Längsachse der Sperrstange 5 in den Schaltknauf 14 eingedrückt ist. Über die Verbindung zwischen Nut 10 und Führungsstift 8 wird der Federträger 2 um die Achse 9 ausgeschwenkt, wobei die Schenkelfeder 1 mit ihren beiden Armen ebenfalls verschwenkt wird und mit dem zweiten Schenkelfederarm 7 die Sperrstange 5 axial nach oben auslenkt und somit eine Entriegelung des Schaltarmes herbeiführt. Das heißt also, daß die Federkraft der Schenkelfeder 1 ausreicht, um ein sicheres Anheben der Sperrstange und damit eine sichere Betätigung der Entriegelungsvorrichtung zu bewirken.

Wird nun aufgrund vordefinierter Fahrzeugkonfigurationen, zum Beispiel wenn der Zündschlüssel nicht gedreht ist, die Sperrstange 5 in einer Verriegelungsposition arretiert, so führt eine kraftvolle Betätigung des Entriegelungsknopfes 4 nicht zu einem Anheben der Sperrstange 5, sondern lediglich zu einer Annäherung der beiden Schenkelfederarme 6 und 7, ohne daß Schäden in der sonstigen Mechanik auftreten.

Diese Situation des Eindrückens des Entriegelungsknopfes 4 in den Schaltknauf bei gleichzeitiger Arretierung der Sperrstange 5 ist in der Figur 3 abgebildet.

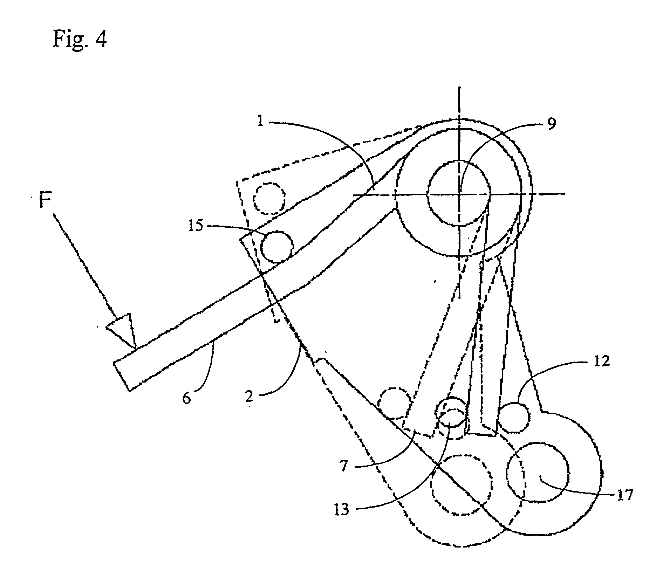

Zum besseren Verständnis ist in der Figur 4 nochmals das federnde Kraftübertragungselement in zwei Positionen (durchgehend gezeichnet und gestrichelt gezeigt) dargestellt. Das Kraftübertragungselement besteht aus dem Federträger 2, der um eine Achse 9 schwenkbar gelagert ist. Auf der Unterseite des Federträgers 2 ist ein Loch 17 vorgesehen, in das der hier nicht dargestellte Führungsstift 8 eingreifen kann, um eine Schiebe-/Schwenkverbindung zu dem hier ebenfalls nicht dargestellten Entriegelungsknopf herstellen zu können. Die Schenkelfeder 1 ist auf der unteren Seite zwischen dem ersten Federanschlag 12 und dem zweiten Federanschlag 13 eingeklemmt. Die Schenkelfeder umschließt im weiteren Verlauf die Achse 9 und liegt unter Vorspannung gegen den dritten Federanschlag 15 an. Wird der Federträger 2 um die Achse 9 ausgelenkt, so nimmt er im Normalfall die Schenkelfeder entsprechend der Drehung mit und übt mit dem zweiten Schenkelfederarm einen Druck auf die anzuhebende Sperrstange 5 aus. Ist die Sperrstange 5 nicht verriegelt, so bewirkt die Übertragung der Kraft ein Ausweichen der Sperrstange 5 und letztendlich eine Entriegelung der Automatikschaltung. Durch eine Arretierung der Sperrstange wird jedoch dafür gesorgt, daß diese nicht ausweichen kann. So entsteht eine Gegenkraft F, die von einem bestimmten Wert an dafür sorgt, daß eine elastische Verformung der Schenkelfeder 1 eintritt, wobei der zweite Schenkelfederarm 7 in seiner Position verharrt, während der Federträger 2 um die Achse 9 ausgelenkt wird.

Durch eine entsprechende Wahl der Federstärken der Schenkelfeder ist es nun möglich, Zerstörungen in der Schaltvorrichtung durch Mißbrauchsbetätigungen des Entriegelungsknopfes 4 zu verhindern. Außerdem kann nun auch die Dimensionierung der Bauteile wesentlich filigraner ausgestaltet werden, da diese nicht mehr gegen unbeabsichtigt grobe Krafteinwirkungen geschützt werden müssen.

Insgesamt wird durch die Erfindung erreicht, daß im Falle einer gewollten Sperrung des Sperrhebels die Betätigung des Handbetätigungselementes zur Entriegelung des Schalthebels auch bei größerer Krafteinwirkung keine Zerstörungen im Schalthebel beziehungsweise in der gesamten Schaltvorrichtung hervorrufen kann.

Es versteht sich, daß die vorstehend genannten und in den Ansprüchen wiedergegebenen Merkmale der Erfindung nicht nur in der jeweils angegebenen Kombination, sondern auch in anderen Kombinationen oder in Alleinstellung verwendbar sind, ohne den Rahmen der Erfindung zu verlassen.

### BEZUGSZEICHENLISTE:

- 1: Schenkelfeder
- 2: Federträger
- 3: Steg
- 4: Entriegelungsknopf / Schieber
- 5: Zug-/Druckstange / Sperrstange
- 6: erster Schenkelfederarm
- 7: zweiter Schenkelfederarm
- 8: Stift (Führungsstift)
- 9: Achse
- 10: Nut
- 11: Anschlagfläche zur Wegbegrenzung
- 12: erster Federanschlag
- 13: zweiter Federanschlag
- 14: Schaltknauf
- 15: dritter Federanschlag
- 16: Schaltrohr
- 17: Loch für Führungsstift

## Patentansprüche

1. Schaltvorrichtung mit einem Schalthebel für ein Automatikgetriebe eines Kraftfahrzeuges, mit einer Entriegelungsmechanik (5) zum Entriegeln des Schalthebels mit einem Handbetätigungselement (4), wobei der Schalthebel in mindestens einer Schaltgasse zwischen mindestens zwei unterschiedlichen Schaltstellungen beweglich und in diesen Schaltstellungen zumindest teilweise in Abhängigkeit von unterschiedlichen Fahrzeugkonfigurationen vernegelbar ist, wobei in der Entriegelungsmechanik (4, 5) ein federndes Kraftübertragungselement (1,2) vorgesehen ist,
**dadurch gekennzeichnet, dass**
das federnde Kraftübertragungselement einen um eine Achse (9) schwenkbaren Federträger (2) und eine darauf verspannte, gekrümmte Schenkelfeder (1) aufweist, die an ihrem einen Schenkel zweiseitig und an ihrem anderen Schenkel einseitig in Schwenkrichtung eingespannt und das federnde Kraftübertragungselement (1, 2) als Verbindungsglied zwischen Entriegelungsmechanik (5) und Handbetätigungselement (4) angeordnet ist.

2. Schaltvorrichtung gemäß dem voranstehenden Anspruch 1,
**dadurch gekennzeichnet, dass**
die Entriegelungsmechanik eine axial zum Schalthebel bewegliche Sperrstange (5) aufweist.

3. Schaltvorrichtung gemäß einem der voranstehenden Ansprüche 1 bis 2,
**dadurch gekennzeichnet, dass**
das federnde Kraftübertragungselement (1, 2) beziehungsweise die Schenkelfeder des Kraftübertragungselementes (1) eine Vorspannung aufweist.

4. Schaltvorrichtung gemäß einem der voranstehenden Ansprüche 1 bis 3,
**dadurch gekennzeichnet, dass**
die Schenkelfeder (1) des Kraftübertragungselementes die Achse (9) zumindest teilweise umschließt.

5. Schaltvorrichtung gemäß einem der voranstehenden Ansprüche 1 bis 4,
**dadurch gekennzeichnet, dass**
das federnde Kraftübertragungselement (1,2) und das Handbetätigungselement (4) eine schwenk- und schiebebewegliche Verbindung, vorzugsweise über den Eingriff eines Stiftes (8) oder einer Rolle an einem der Elemente in eine Nut (10) oder ein Langloch am anderen Element, aufweisen.

6. Schaltvorrichtung gemäß einem der voranstehenden Ansprüche 1 bis 5,
**dadurch gekennzeichnet, dass**
die Sperrstange (5) einen Anschlag oder einen Eingriff aufweist, gegen oder in den das federnde Kraftübertragungselement (1, 2) eingreift.

## Claims

1. Gear shift device having a shift lever for an automatic transmission of a motor vehicle, comprising a release mechanism (5) for release of the shift lever by a manual actuating element (4), wherein the shift lever is movable in at least one shift gate between at least two different shift positions and is lockable in said shift positions at least partially in dependence upon different vehicle configurations, wherein in the release mechanism (4, 5) a resilient force-transmitting element (1, 2) is provided,
**characterized in that**
the resilient force-transmitting element comprises a spring bracket (2) pivotable about an axis (9) and a curved leg spring (1), which is braced thereon and is clamped in at its one leg on two sides and at its other leg on one side in swivelling direction and the resilient force-transmitting element (1, 2) is disposed as a connecting member between release mechanism (5) and manual actuating element (4).

2. Gear shift device according to the preceding claim 1,
**characterized in that**
the release mechanism comprises a ratchet bar (5) movable axially relative to the shift lever.

3. Gear shift device according to one of the preceding claims 1 to 2,
**characterized in that**
the resilient force-transmitting element (1, 2) and/or the leg spring of the force-transmitting element (1) has a bias.

4. Gear shift device according to one of the preceding claims 1 to 3,
**characterized in that**
the leg spring (1) of the force-transmitting element at least partially surrounds the axis (9).

5. Gear shift device according to one of the preceding claims 1 to 4,
**characterized in that**
the resilient force-transmitting element (1, 2) and the manual actuating element (4) have a swivelling and sliding connection, preferably via the engagement of a pin (8) or roller on one of the elements into a groove (10) or oblong hole in the other element.

6. Gear shift device according to one of the preceding claims 1 to 5,
**characterized in that**
the ratchet bar (5) has a stop or an engagement, against which or into which the resilient force-transmitting element (1, 2) engages.

## Revendications

1. Dispositif de changement de vitesses comprenant un levier de changement de vitesses pour la boîte de vitesses automatique d'un véhicule automobile, avec un mécanisme de déverrouillage (5) pour le déverrouillage du levier de changement de vitesses avec un élément d'actionnement manuel (4), le levier de changement de vitesses pouvant être déplacé dans au moins une voie de passage entre au moins deux positions de changement de vitesses différentes et verrouillé dans lesdites positions de changement de vitesses au moins partiellement en fonction de configurations de véhicules différentes, un élément de transmission de force à ressort (1, 2) étant prévu au sein du mécanisme de déverrouillage (4, 5),
**caractérisé en ce que**
l'élément de transmission de force à ressort présente un support de ressort (2) pouvant pivoter autour d'un axe (9) et dessus un ressort à branches (1) gauchi, recourbé, qui est serré dans le sens de pivotement au niveau de l'une de ses branches de manière bilatérale et au niveau de l'autre branche, de manière unilatérale et l'élément de transmission de force à ressort (1, 2) est disposé en tant que membre de liaison entre le mécanisme de déverrouillage (5) et l'élément d'actionnement manuel (4).

2. Dispositif de changement de vitesses selon la revendication 1 précédente,
**caractérisé en ce que**
le mécanisme de déverrouillage présente une barre de blocage (5) déplaçable de manière axiale par rapport au levier de changement de vitesses.

3. Dispositif de changement de vitesses selon l'une des revendications 1 à 2 précédentes,
**caractérisé en ce que**
l'élément de transmission de force à ressort (1, 2) ou le ressort à branches de l'élément de transmission de force (1) présente une pré-tension.

4. Dispositif de changement de vitesses selon l'une des revendications 1 à 3 précédentes,
**caractérisé en ce que**
le ressort à branches (1) de l'élément de transmission de force entoure au moins partiellement l'axe (9).

5. Dispositif de changement de vitesses selon l'une des revendications 1 à 4 précédentes,
**caractérisé en ce que**
l'élément de transmission de force à ressort (1, 2) et l'élément d'actionnement manuel (4) présentent un raccordement pivotant ou coulissant, de préférence via l'engrènement d'une goupille (8) ou d'un rouleau au niveau d'un des éléments dans une rainure (10) ou un trou oblong, à l'autre élément.

6. Dispositif de changement de vitesses selon l'une des revendications 1 à 5 précédentes,
**caractérisé en ce que**
la barre de blocage (5) présente une butée ou un engrènement, contre ou dans laquelle / lequel s'engrène l'élément de transmission de force à ressort (1, 2).
